# EUROPÄISCHE PATENTSCHRIFT

(11) **EP 3 453 229 B1**
(45) Veröffentlichungstag und Bekanntmachung des Hinweises auf die Patenterteilung: **29.07.2020**
(21) Anmeldenummer: 17720749.5
(22) Anmeldetag: 25.04.2017
(51) Int. Cl.: H05B 45/20

(54) **BELEUCHTUNGSVORRICHTUNG**
ILLUMINATION DEVICE
DISPOSITIF D'ÉCLAIRAGE

(30) Priorität: 04.05.2016 DE 102016207730
(43) Veröffentlichungstag der Anmeldung: 13.03.2019
(73) Patentinhaber: Bayerische Motoren Werke Aktiengesellschaft, 80809 München (DE)
(72) Erfinder: ISELE, Robert, 82256 Fuerstenfeldbruck (DE); ALTINGER, Florian, Shenyang/Heping District 110001 (CN); BRUEGL, Juergen, 81669 Muenchen (DE)
(86) Internationale Anmeldenummer: PCT/EP2017/059752
(87) Internationale Veröffentlichungsnummer: WO 2017/190982

(56) Entgegenhaltungen:
- WO-A1-2004/086822
- WO-A1-2009/034060
- US-A1- 2010 259 198

## Beschreibung

Die Erfindung betrifft eine Beleuchtungsvorrichtung, insbesondere für ein Kraftfahrzeug.

Aus dem Stand der Technik ist es bekannt, für Beleuchtungsvorrichtungen in Kraftfahrzeugen Mehrfarb-LED-Einheiten zu verwenden. Diese LED-Einheiten umfassen mehrere Einfarb-LEDs und werden in der Regel mit LED-Treibern angesteuert, um die Helligkeit und den Farbort (d.h. die Mischfarbe) zu variieren. Hierzu wird ein Modul mit einem Mikroprozessor verwendet, der zum einen eine Kommunikation mit einem Kraftfahrzeug-Datenbus übernimmt und zum anderen die LED-Einheiten treibt, üblicherweise über PWM-Ausgänge. Als Kraftfahrzeug-Datenbus kommt dabei häufig der sog. LIN-Bus (LIN = Local Interconnect Network) zum Einsatz.

Aus dem Stand der Technik sind ferner neuartige Mehrfarb-LED-Einheiten bekannt, die über eine integrierte Schaltung verfügen. Bei diesen LED-Einheiten sind die Einfarb-LEDs und die integrierte Schaltung in einem gemeinsamen Gehäuse untergebracht, wodurch eine hohe Packungsdichte erreicht werden kann. Die einzelnen LED-Einheiten werden über einen Datenstrom gesteuert.

Bis dato werden Parametrisierungen, die in Beleuchtungsvorrichtungen mit Mehrfarb-LED-Einheiten zum Betrieb der einzelnen LED-Einheiten benötigt werden, in einem zentralen Verarbeitungsmodul hinterlegt. Dies hat den Nachteil, dass lokal unterschiedliche Betriebsbedingungen der einzelnen LED-Einheiten nur unzureichend kompensiert werden, was zu einem uneinheitlichen Erscheinungsbild der Beleuchtungsvorrichtung führen kann.

Um sicherzustellen, dass eine Mehrfarb-LED-Einheit Licht mit einer gewünschten Mischfarbe aussendet, erfolgt häufig eine Kalibrierung der entsprechenden Mehrfarb-LED-Einheit. Dabei werden ein oder mehrere vorbestimmte Farborte und gegebenenfalls auch Helligkeiten der Mehrfarb-LED-Einheit eingestellt und die tatsächlichen Farborte bzw. Helligkeiten mittels eines Kalibrierungssensors erfasst. Ferner werden die Betriebsströme, die sich für die Einfarb-LEDs in der Mehrfarb-LED-Einheit ergeben, für die jeweiligen eingestellten Farborte bzw. Helligkeiten gemessen. Die Zuordnung dieser Betriebsströme zu den Farborten bzw. Helligkeiten stellen dann Kalibrierdaten dar, auf deren Basis im späteren Betrieb der Mehrfarb-LED-Einheit die gewünschten Farborte bzw. Helligkeiten eingestellt werden können.

Die Druckschrift US 2010/0259198 A1 offenbart ein Verfahren zur Einstellung eines Farborts in einem Leuchtmodul in Abhängigkeit von einer ermittelten Temperatur. Im Rahmen dieser Einstellung wird auch auf Kalibrierdaten zurückgegriffen.

Das Dokument WO 2009/034060 A1 beschreibt ein Verfahren zur temperaturabhängigen Einstellung der farb- und fotometrischen Eigenschaften einer LED-Beleuchtungseinrichtung unter Verwendung von Kalibrierdaten. In dem Dokument wird auch die Farb- und Helligkeitskalibrierung der LED-Beleuchtungseinrichtung beschrieben.

In der Druckschrift WO 2004/086822 A1 ist ein Kraftfahrzeugleuchtenmodul offenbart, das einzelne LEDs als Leuchtmittel und Sensoren zur Erfassung äußeren und/oder innerer Einflüsse beim Betrieb des LEDs und/oder fertigungsbedingter Eigenschaften der LEDs umfasst. Die LEDs werden in Abhängigkeit von den erfassten Einflüssen bzw. Eigenschaften über eine Mikrocontroller-Schaltung gesteuert.

In der Druckschrift DE 10 2006 037 292 A1 ist die Kalibrierung eines LED-Lichtmoduls beschrieben, bei der mittels eines Sensors im Lichtmodul Intensitätswerte der einzelnen LEDs des Lichtmoduls für einen vorgegebenen Farbort erfasst werden. Der Farbort wird durch einen Kalibrierungssensor außerhalb des LED-Moduls gemessen. Die erfassten Intensitätswerte werden in einer Steuerung des LED-Moduls als Kalibrierdaten hinterlegt. Im Betrieb des LED-Moduls werden die gemessenen Intensitätswerte des Sensors mit Hilfe der Kalibrierdaten derart eingestellt, dass der erwünschte Farbort erreicht wird.

In dem Dokument WO 2011/106661 A1 ist ein Kalibrierverfahren für ein LED-Leuchtsystem beschrieben. Die Kalibrierdaten werden als Look-up-Tabelle gespeichert, auf welche im Betrieb der LED-Leuchtsystems zugegriffen wird.

Aufgabe der Erfindung ist es, eine Beleuchtungsvorrichtung aus mehreren Mehrfarb-LED-Einheit mit einer einfachen Ansteuerung sowie ein einfaches Verfahren zur Herstellung einer solchen Beleuchtungsvorrichtung zu schaffen.

Diese Aufgabe wird durch die Beleuchtungsvorrichtung gemäß Patentanspruch 1 bzw. das Herstellungsverfahren gemäß Patentanspruch 12 gelöst. Weiterbildungen der Erfindung sind in den abhängigen Ansprüchen definiert.

Die erfindungsgemäße Beleuchtungsvorrichtung ist vorzugsweise für ein Kraftfahrzeug vorgesehen, wie z.B. einen PKW und gegebenenfalls auch einen LKW. Die Beleuchtungsvorrichtung umfasst eine oder mehrere Mehrfarb-LED-Einheiten mit jeweils einstellbarem Farbort und einstellbarer Helligkeit (d.h. Lichtintensität). Der Begriff des Farborts ist dem Fachmann hinlänglich bekannt und beschreibt die Mischfarbe, welche durch die jeweilige Mehrfarb-LED-Einheit erzeugt wird. Der Farbort kann beispielsweise als Ort in einem Farbdiagramm, insbesondere in einem Farbdiagramm des CIE-Normenvalenzsystems, angegeben werden.

In der erfindungsgemäßen Beleuchtungsvorrichtung ist jede Mehrfarb-LED-Einheit ein einzelnes Halbleiterbauelement mit mehreren und vorzugsweise mindestens drei Einfarb-LEDs unterschiedlicher Farbe. Das einzelne Halbleiterbauelement umfasst ferner einen Mikrocontroller. Die Einfarb-LEDs und der Mikrocontroller sind von einem Gehäuse des Halbleiterbauelements umgeben, d.h. sie sind in einem gemeinsamen Gehäuse des Halbleiterbauelements untergebracht.

In der erfindungsgemäßen Beleuchtungsvorrichtung sind in dem Mikrocontroller Kalibrierdaten gespeichert, welche eine Abhängigkeit von Betriebsströmen der Einfarb-LEDs von zumindest einem Farbort und zumindest einer Helligkeit der jeweiligen Mehrfarb-LED-Einheit beschreiben. Der Mikrocontroller ist dazu eingerichtet, jede Einfarb-LED in Abhängigkeit von einem eingestellten Farbort und einer eingestellten Helligkeit der jeweiligen Mehrfarb-LED-Einheit durch Einstellen der Betriebsströme der jeweiligen Einfarb-LEDs unter Zugriff auf die Kalibrierdaten anzusteuern. Mit anderen Worten wird durch die Kalibrierdaten erreicht, dass die Betriebsströme der Einfarb-LEDs auf solche Werte eingestellt werden, dass der tatsächliche Farbort und die tatsächliche Helligkeit weitestgehend, d.h. innerhalb eines vorgegebenen Toleranzbereichs, dem erwünschten (eingestellten) Farbort und der erwünschten (eingestellten) Helligkeit entsprechen.

Die erfindungsgemäße Beleuchtungsvorrichtung weist den Vorteil auf, dass die zum Betrieb einer jeweiligen Mehrfarb-LED-Einheit verwendeten Kalibrierdaten lokal in einem Mikrocontroller gespeichert sind, der Bestandteil eines einzelnen Halbleiterbauelements der Mehrfarb-LED-Einheit ist. Hierdurch kann auf einfache Weise ohne Zugriff auf zentrale Daten individuell für jede einzelne Mehrfarb-LED-Einheit eine erwünschte Helligkeit bzw. ein erwünschter Farbort eingestellt werden.

In einer besonders bevorzugten Ausführungsform geben die Kalibrierdaten für einen einzelnen vorgegebenen Farbort und eine einzelne vorgegebene Helligkeit der jeweiligen Mehrfarb-LED-Einheit die einzustellenden Betriebsströme der jeweiligen Einfarb-LEDs an. Aus diesen Betriebsströmen für den einzelnen Farbort und die einzelne Helligkeit berechnet der Mikrocontroller für einen im Betrieb eingestellten Farbort und eine im Betrieb eingestellte Helligkeit zu verwendende Betriebsströme der jeweiligen Einfarb-LEDs. Die Berechnung von Betriebsströmen basierend auf solchen Kalibrierdaten ist an sich bekannt. Zum Beispiel kann die Berechnung basierend auf einer Interpolation erfolgen.

In einer weiteren, besonders bevorzugten Ausführungsform ist der Mikrocontroller zumindest eines Teils der Mehrfarb-LED-Einheiten derart ausgestaltet, dass er bei der Ansteuerung einer jeweiligen Einfarb-LED neben den Kalibrierdaten ferner die geeignet bereitgestellte (aktuelle) Betriebstemperatur der jeweiligen Mehrfarb-LED-Einheit berücksichtigt, so dass ein eingestellter Farbort und eine eingestellte Helligkeit im Betrieb der jeweiligen Mehrfarb-LED-Einheit konstant gehalten werden. Mit anderen Worten ist in dem Mikrocontroller ein Algorithmus zur Temperaturkompensation hinterlegt, wodurch ein gleichbleibendes Erscheinungsbild der Beleuchtungsvorrichtung auch bei Temperaturschwankungen in deren Betrieb gewährleistet wird. Algorithmen zur Temperaturkompensation sind an sich bekannt und greifen beispielsweise auf Kennlinien bzw. Tabellen zurück, welche Betriebsströme in Abhängigkeit von der Betriebstemperatur der jeweiligen Mehrfarb-LED-Einheit geeignet korrigieren.

In einer weiteren Ausgestaltung der erfindungsgemäßen Beleuchtungsvorrichtung ist im Halbleiterbauelement zumindest eines Teils der Mehrfarb-LED-Einheiten ein Temperatursensor integriert, der dazu eingerichtet ist, die (aktuelle) Betriebstemperatur der jeweiligen Mehrfarb-LED-Einheit zu messen. Diese gemessene Betriebstemperatur kann in dem oben beschriebenen Temperatur-Algorithmus verarbeitet werden.

In einer weiteren Variante wird auf einen Temperatursensor zur Messung der aktuellen Betriebstemperatur verzichtet. Stattdessen ist der Mikrocontroller zumindest eines Teils der Mehrfarb-LED-Einheiten dazu eingerichtet, die Betriebstemperatur der jeweiligen Mehrfarb-LED-Einheit basierend auf zumindest einem Teil der Betriebsspannungen und/oder Betriebsströme der Einfarb-LEDs der jeweiligen Mehrfarb-LED-Einheit zu ermitteln. Diese ermittelte Betriebstemperatur kann in dem oben beschriebenen Temperatur-Algorithmus verarbeitet werden.

In einer weiteren bevorzugten Variante der erfindungsgemäßen Beleuchtungsvorrichtung ist der Mikrocontroller zumindest eines Teils der Mehrfarb-LED-Einheiten derart ausgestaltet, dass er im Falle, dass die (aktuelle) Betriebstemperatur eine vorgegebene Schwelle überschreitet, die Helligkeit der jeweiligen Mehrfarb-LED-Einheit (d.h. der Mehrfarb-LED-Einheit, zu der der Mikrocontroller gehört) verringert. Hierdurch wird sichergestellt, dass die Mehrfarb-LED-Einheit aufgrund zu hoher Betriebstemperaturen beschädigt wird. Vorzugsweise kann dabei ein Zusammenhang vorgegeben sein, gemäß dem die Helligkeit der Mehrfarb-LED-Einheit umso stärker vermindert wird, je mehr die vorgegebene Schwelle überschritten wird. Gegebenenfalls kann die Helligkeit der Mehrfarb-LED-Einheit auch auf null herabgesetzt werden, d.h. die entsprechende Mehrfarb-LED-Einheit ausgeschaltet werden. Dies kann beispielsweise durch eine zweite Schwelle erreicht werden, die höher als die vorgegebene Schwelle ist. Sollte die aktuelle Betriebstemperatur diese zweite Schwelle überschreiten, wird die Mehrfarb-LED-Einheit abgeschaltet.

In einer besonders bevorzugten Ausführungsform umfasst die erfindungsgemäße Beleuchtungsvorrichtung mehrere Mehrfarb-LED-Einheiten, welche an einen internen Datenbus (d.h. einen Datenbus innerhalb der Beleuchtungsvorrichtung) angeschlossen sind. Dieser interne Datenbus ist wiederum an ein Verarbeitungsmodul gekoppelt, wobei das Verarbeitungsmodul dazu eingerichtet ist, interne Steuerbefehle zur Einstellung der Helligkeit und des Farborts der einzelnen Mehrfarb-LED-Einheiten auf den internen Datenbus zu geben. Vorzugsweise ist das obige Verarbeitungsmodul dazu eingerichtet, externe Steuerbefehle von einem Kraftfahrzeug-Datenbus zu empfangen und in die obigen internen Steuerbefehle zu wandeln.

In der soeben beschriebenen Ausführungsform wird eine einfache Ansteuerung der einzelnen Mehrfarb-LED-Einheiten über einen internen Datenbus erreicht. Der interne Datenbus kann z.B. ein SPI-Datenbus (SPI = Serial Protocol Interface) sein oder gegebenenfalls auch ein anderer Datenbus, wie z.B. ein differentieller Datenbus, der digitale Daten über eine Spannungsdifferenz zwischen zwei Leitungen codiert. Der obige Kraftfahrzeug-Datenbus kann beispielsweise ein LIN-Bus (LIN = Local Interconnect Network) oder auch ein CAN-Bus (CAN = Controller Area Network) sein.

In einer weiteren bevorzugten Ausführungsform umfasst zumindest ein Teil der Mehrfarb-LED-Einheiten eine oder mehrere RGB-LED-Einheiten und/oder RGBW-LED-Einheiten. Eine RGB-LED-Einheit umfasst in an sich bekannter Weise eine rote, grüne und blaue Einfarb-LED und eine RGBW-LED-Einheit umfasst zusätzlich zu einer roten, grünen und blauen LED auch eine Weißlicht-LED.

In einer besonders bevorzugten Ausführungsform ist die Beleuchtungsvorrichtung eine Innenraumbeleuchtung in einem Kraftfahrzeug oder gegebenenfalls auch eine Außenbeleuchtung an der Außenseite des Kraftfahrzeugs. Hierdurch können ansprechende Lichteffekte mit einem homogenen Erscheinungsbild generiert werden.

Neben der oben beschriebenen Beleuchtungsvorrichtung betrifft die Erfindung ein Kraftfahrzeug, insbesondere einen PKW oder gegebenenfalls auch einen LKW, das eine oder mehrere der erfindungsgemäßen Beleuchtungsvorrichtungen bzw. von bevorzugten Varianten dieser Beleuchtungsvorrichtungen umfasst.

Die Erfindung betrifft darüber hinaus ein Verfahren zur Herstellung von erfindungsgemäßen Beleuchtungsvorrichtungen bzw. bevorzugten Varianten dieser Beleuchtungsvorrichtungen. Dabei werden die Mehrfarb-LED-Einheiten für die Beleuchtungsvorrichtungen hergestellt, ohne dass danach eine Vorsortierung basierend auf einer Messung von Farbort und Helligkeit der jeweiligen Mehrfarb-LED-Einheiten durchgeführt wird. Anschließend wird vor oder nach dem Zusammenbau der Mehrfarb-LED-Einheiten zu den jeweiligen Beleuchtungsvorrichtungen jede Mehrfarb-LED-Einheit einzeln einem Kalibriervorgang unterzogen, bei dem die Kalibrierdaten für die jeweilige Mehrfarb-LED-Einheit ermittelt werden und in dem Mikrocontroller der jeweiligen Mehrfarb-LED-Einheit gespeichert werden.

In dem erfindungsgemäßen Verfahren wird auf den Vorgang des sog. Binnings verzichtet. Beim Binning werden zur Berücksichtigung von Fertigungstoleranzen Farbort und Helligkeit der jeweiligen Mehrfarb-LED-Einheiten gemessen und die Mehrfarb-LED-Einheiten in Abhängigkeit von Farbort und Helligkeit klassifiziert, wobei Mehrfarb-LED-Einheiten mit den gleichen Charakteristika der gleichen Klasse zugeordnet werden und entsprechend vorsortiert werden. Herkömmlicherweise werden dann in Abhängigkeit davon, zu welcher Klasse eine Mehrfarb-LED-Einheit gehört, geeignete Kalibrierdaten zur Steuerung der entsprechenden Mehrfarb-LED-Einheit verwendet.

Im erfindungsgemäßen Verfahren wird der Kalibriervorgang ohne eine daran gekoppelte Vorsortierung durchgeführt und die sich hierbei ergebenden Kalibrierdaten sogleich im Mikrocontroller der jeweiligen Mehrfarb-LED-Einheit hinterlegt. Das Herstellungsverfahren wird hierdurch wesentlich vereinfacht, so dass Ressourcen bei der Fertigung gespart werden.

In einer bevorzugten Variante des erfindungsgemäßen Verfahrens wird im Rahmen des Kalibriervorgangs eine jeweilige Mehrfarb-LED-Einheit betrieben und dabei der Farbort und die Helligkeit der jeweiligen Mehrfarb-LED-Einheit gemessen, wobei die Betriebsströme der jeweiligen Einfarb-LED-Einheiten variiert werden, bis ein oder mehrere vorgegebene Farborte und Helligkeiten der jeweiligen Mehrfarb-LED-Einheit eingestellt sind, wobei die sich für den vorgegebenen oder die vorgegebenen Farborte und die vorgegebene oder vorgegebenen Helligkeiten vorliegenden Betriebsströme gemessen werden und als Kalibrierdaten zusammen mit dem oder den vorgegebenen Farborten und der oder den vorgegebenen Helligkeiten in dem Mikrocontroller der jeweiligen Mehrfarb-LED-Einheit gespeichert werden.

Ein Ausführungsbeispiel der Erfindung wird nachfolgend anhand der beigefügten Figuren detailliert beschrieben.

Es zeigen:
- Fig. 1: eine schematische Darstellung einer Ausführungsform einer erfindungsgemäßen Beleuchtungsvorrichtung; und
- Fig. 2: eine Detailansicht einer LED-Einheit aus Fig. 1.

Im Folgenden wird eine Ausführungsform der Erfindung anhand einer Beleuchtungsvorrichtung beschrieben, welche in einem Kraftfahrzeug als Innenbeleuchtung verbaut ist und als Leuchtmittel eine Vielzahl von auf einem Band angeordneten Mehrfarb-LED-Einheiten 3 umfasst. Diese Mehrfarb-LED-Einheiten, welche nachfolgend auch einfach als LED-Einheiten bezeichnet werden, stellen jeweils ein einzelnes Halbleiterbauelement mit mehreren Einfarb-LEDs 301 bis 304 und einem Mikrocontroller 4 dar. Die Einfarb-LEDs und der Mikrocontroller sind in einem gemeinsamen Gehäuse des Halbleiterbauelements integriert. Die Einfarb-LED 301 ist eine rote LED, die Einfarb-LED 302 eine grüne LED, die Einfarb-LED 303 eine blaue LED und die Einfarb-LED 304 eine weiße LED. Mit den bandförmig angeordneten LED-Einheiten kann eine sehr hohe Packungsdichte erreicht werden (je nach Gehäuseform von 144 bis 367 LEDs/m).

Die einzelnen LED-Einheiten 3 werden über einen digitalen Datenstrom in der Form eines Bitstroms angesteuert, der mittels eines internen Datenbusses 2 (d.h. eines intern in der Beleuchtungsvorrichtung vorgesehenen Datenbusses) den einzelnen LED-Einheiten zugeführt wird. Der interne Datenbus umfasst eine Leitung CL für den Takt und einer Leitung DL für den Bitstrom.

Die Signale auf dem internen Datenbus 2 stammen von einem Verarbeitungsmodul 1, das an einen LIN-Bus 6 des Kraftfahrzeugs gekoppelt ist. Das Verarbeitungsmodul umfasst einen LIN-Transceiver 101, der entsprechende digitale Signale zur Ansteuerung der LED-Einheiten 3 vom LIN-Bus 6 abgreift, sowie ein Mikroprozessor 102, der die abgegriffenen Signale in entsprechende Datensignale auf der Datenleitung DL wandelt. Die auf dem LIN-Bus 6 übertragenen Signale umfassen dabei Signale, welche für die Beleuchtungsvorrichtung bestimmt sind und ein für die Beleuchtungsvorrichtung einzustellendes Lichtmuster festlegen. Diese Signale stammen wiederum von einem Steuergerät des Kraftfahrzeugs, welches beispielsweise basierend auf einer Eingabe des Fahrers das zu generierende Lichtmuster festlegt und als entsprechendes Signal auf den LIN-Bus gibt. Über das Verarbeitungsmodul 1 wird erkannt, ob das Lichtmuster entsprechend dem aktuellen Signal auf dem LIN-Bus 6 für die Beleuchtungsvorrichtung vorgesehen ist. Ist dies der Fall, wird dieses Signal mittels des Mikroprozessors 102 in ein entsprechendes Signal für den internen Datenbus 2 umgesetzt.

Der interne Datenbus 2 kann z.B. ein SPI-Bus sein. Vorzugsweise werden dabei die Signale für den SPI-Bus von dem Mikroprozessor 102 mittels Software-SPI erzeugt. Software-SPI ist an sich aus dem Stand der Technik bekannt und stellt eine Programmbibliothek dar, mit der beliebige freie Pins des Mikroprozessors 102 zur Signalabgabe auf den SPI-Bus genutzt werden können. Alternativ kann jedoch auch Hardware-SPI eingesetzt werden. Dabei sind spezielle SPI-Pins zur Signalabgabe auf den SPI-Bus vorgesehen. Die Verwendung von Software-SPI hat den Vorteil, dass in dem internen Datenbus 2 mehrere Leitungen DL und CL zur Ansteuerung einer größeren Anzahl von LED-Einheiten 3 vorgesehen sein können. Der interne Datenbus kann als Alternative zu einem SPI-Bus auch als differentieller Datenbus oder als beliebig anderer Datenbus ausgestaltet sein. Ein differentieller Datenbus zeichnet sich dadurch aus, dass er digitale Daten über eine Spannungsdifferenz zwischen zwei Leitungen codiert.

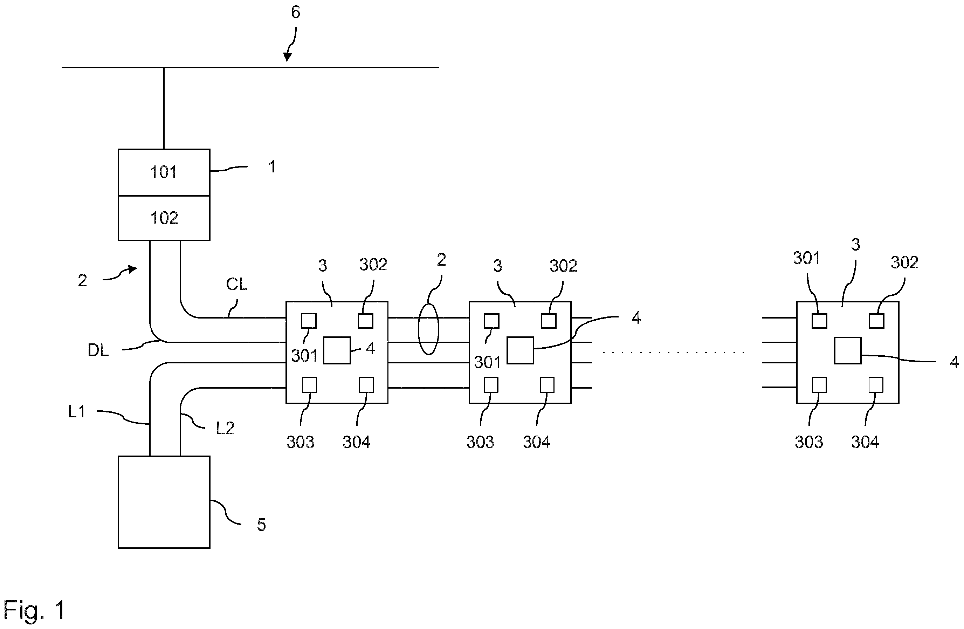

In der Ausführungsform der Fig. 1 sind neben den Leitungen CL und DL zwei Stromleitungen L1 und L2 vorgesehen, welche an eine Gleichspannungsversorgung 5 angeschlossen sind. Basierend auf dem über die Datenleitung DL empfangenen Bitstrom erfolgt eine PWM-Modulation des den einzelnen LEDs 301 bis 304 zugeführten Stroms, um hierdurch die LEDs entsprechend dem Bitstrom auf der Datenleitung DL anzusteuern.

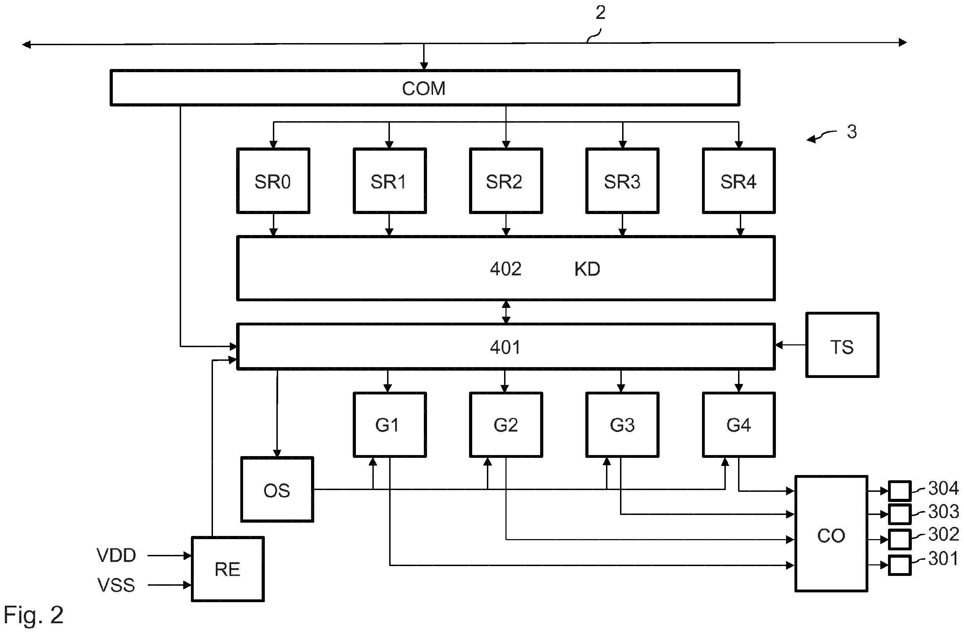

Der Aufbau einer einzelnen LED-Einheit 3 aus Fig. 1 ist im Detail in Fig. 2 gezeigt. Alle dargestellten Komponenten der LED-Einheit sind dabei in einem einzelnen Halbleiterbauelement integriert. Die Signale des Datenbusses 2 werden über eine Kommunikationsschnittstelle COM der LED-Einheit 3 empfangen. Das Taktsignal der Taktleitung CL wird an den weiter unten beschriebenen Mikroprozessor 401 weitergeleitet, wohingegen der Datenstrom der Datenleitung DL nach Decodierung in der Kommunikationsschnittstelle COM auf 8-Bit-Schieberegister SR0, SR1, SR2, SR3 und SR4 gegeben wird. Der vom Schieberegister SR0 ausgegebene Wert zeigt dabei die gewünschte Gesamthelligkeit der LED-Einheit an, wohingegen über die Werte der Schieberegister SR1 bis SR4 die Farbanteile der einzelnen Einfarb-LEDs zur Erzeugung der gewünschten Mischfarbe ausgegeben werden. Insbesondere wird über das Schieberegister SR1 der Farbanteil der roten LED 301, über das Schieberegister SR2 der Farbanteil der grünen LED 302, über das Schieberegister 303 der Farbanteil der blauen LED 303 und über das Schieberegister 304 der Farbanteil der weißen LED 304 ausgegeben.

Die Werte der einzelnen Schieberegister werden dem Mikrocontroller 4 zugeführt, der aus einer Logik bzw. einem Mikroprozessor 401 sowie einem zugeordneten nichtflüchtigen EEPROM-Speicher 402 besteht. In diesem Speicher sind Kalibrierdaten KD hinterlegt, die aus einem Kalibriervorgang der LED-Einheit stammen und für einen vorgegebenen Standard-Temperaturwert der LED-Einheit festlegen, wie die Betriebsströme der einzelnen Einfarb-LEDs einzustellen sind, damit der aus dem Schieberegister SR0 stammende Gesamthelligkeitswert sowie die Farbmischung (d.h. der diesbezügliche Farbort) entsprechend den Werten aus den Schieberegistern SR1 bis SR4 erreicht werden. In der hier beschriebenen Ausführungsform legen die Kalibierdaten für eine einzelne vorbestimmte Mischfarbe (vorzugsweise eine weiße Farbe), d.h. für einen entsprechenden Farbort im Farbraum, und für einen einzelnen vorbestimmten Helligkeitswert der Mehrfarb-LED-Einheit die einzustellenden Betriebsströme fest. Der Mikroprozessor 401 greift im Betrieb der Mehrfarb-LED-Einheit auf die Kalibrierdaten KD zurück und berechnet basierend auf einer geeigneten Interpolation für den aktuell eingestellten Farbort und die aktuell eingestellte Helligkeit der Mehrfarb-LED-Einheit die einzustellenden Betriebsströme der einzelnen Einfarb-LEDs.

In der hier beschriebenen Ausführungsform ist im Mikroprozessor 401 ferner ein Temperatur-Algorithmus hinterlegt, durch den berücksichtigt wird, dass die Kalibrierdaten für einen Standard-Temperaturwert ermittelt wurden und dementsprechend bei Abweichung der Betriebstemperatur der LED-Einheit von dieser Standard-Temperatur angepasst werden müssen. Diese Anpassung wird über den Temperatur-Algorithmus durchgeführt, wobei hierfür die aktuelle Temperatur der LED-Einheit über einen Temperatursensor TS erfasst wird und dem Mikroprozessor 401 bereitgestellt wird. In an sich bekannter Weise werden dann die ursprünglich für den Standard-Temperaturwert ermittelten Betriebsströme durch den Temperatur-Algorithmus korrigiert. Hierfür kann der Mikroprozessor 401 beispielsweise auf Kennlinien bzw. Tabellen zugreifen, die im Speicher 402 hinterlegt sind und die entsprechenden Korrekturen für verschiedene Betriebstemperaturen angeben. Mit dem Temperatur-Algorithmus wird somit sichergestellt, dass die erwünschte Helligkeit und der erwünschte Farbort entsprechend den Werten aus den Schieberegistern auch bei Temperaturschwankungen richtig eingestellt werden.

Die Betriebsströme für die einzelnen LEDs 301 bis 304 werden über einen Spannungsregler RE bereitgestellt, der aus der in Fig. 1 gezeigten Spannungsversorgung 5 die positive Spannung VDD und die negative Spannung VSS erhält. Der Mikroprozessor 401 erzeugt ferner einen Takt für einen entsprechenden Oszillator OS, der PWM-Generatoren G1, G2, G3 und G4 zugeführt wird. Die Betriebsströme der einzelnen LEDs 301 bis 304 werden in den Generatoren G1 bis G4 über Pulsweitenmodulation erzeugt. Die aus dem Mikroprozessor stammenden Werte der Betriebsströme werden an die einzelnen Generatoren G1 bis G4 gegeben. Der Generator G1 erzeugt mittels Pulsweitenmodulation den Strom für die rote LED 301, der Generator G2 den Strom für die grüne LED 302, der Generator G3 den Strom für die blaue LED 303 und der Generator G4 den Strom für die weiße LED 304. Über die von den einzelnen Generatoren erzeugten PWM-Signale, die über den Stromausgang CO zu den Einfarb-LEDs gelangen, wird dann für LED-Einheit 3 das entsprechende Licht mit der gewünschten Helligkeit und dem gewünschten Farbort gemäß dem Signal eingestellt, das über den internen Datenbus 2 zu der LED-Einheit gelangt.

In der soeben beschriebenen Ausführungsform wurde der aktuelle Temperaturwert durch einen Temperatursensor TS auf dem Halbleiterbauelement der LED-Einheit 3 gemessen. Gegebenenfalls besteht auch die Möglichkeit, dass anstatt der Messung eines Temperaturwerts die aktuelle Temperatur über Kennlinien ermittelt wird, welche für jeweilige Betriebsströme einen Zusammenhang zwischen der Betriebsspannung der einzelnen Einfarb-LEDs und der Temperatur der LED-Einheit angeben. Die Betriebsspannung kann dabei durch einen geeigneten Spannungssensor in der LED-Einheit gemessen werden. Eine solche Art der Temperaturermittlung ist dem Fachmann geläufig und wird beispielsweise in der Druckschrift US 2015/0002023 A1 beschrieben.

Die im Vorangegangenen beschriebene Beleuchtungsvorrichtung wird vorzugsweise durch ein neuartiges Herstellungsverfahren gefertigt, bei dem auf ein sog. Binning verzichtet wird. Beim Binning werden die Mehrfarb-LED-Einheiten nach Herstellung bezüglich Farbort und Helligkeit vermessen und in Abhängigkeit von Farbort und Helligkeit klassifiziert. Basierend auf dieser Klassifizierung werden die LED-Einheiten dann vorsortiert, d.h. LED-Einheiten der gleichen Klasse werden getrennt gesammelt. Gemäß dem neuartigen Herstellungsverfahren werden die produzierten Mehrfarb-LED-Einheiten ohne Vorsortierung gesammelt. Anschließend wird für jede einzelne Mehrfarb-LED-Einheit ein Kalibriervorgang durchgeführt, bei dem Kalibrierdaten der einzelnen LED-Einheit ermittelt und sofort auf dem Mikrocontroller aufgespielt werden. Die LED-Einheiten mit den darauf aufgespielten Kalibrierdaten werden dann zu den jeweiligen Beleuchtungsvorrichtungen zusammengebaut, wobei gegebenenfalls der Zusammenbau auch vor der Kalibrierung der einzelnen LED-Einheiten erfolgen kann.

Die im Vorangegangenen erläuterte Erfindung weist eine Reihe von Vorteilen auf. Insbesondere werden erstmalig Kalibrierdaten direkt in einem Mikrocontroller hinterlegt, der in dem Halbleiterbauelement einer Mehrfarb-LED-Einheit integriert ist. Hierdurch wird auf einfache Weise mittels einer lokalen Information in den einzelnen LED-Einheiten sichergestellt, dass die Beleuchtungsvorrichtung Licht mit einer erwünschten Helligkeit und einem erwünschten Farbort aussendet. Darüber hinaus kann eine solche Beleuchtungsvorrichtung mittels eines sehr einfachen Herstellungsverfahrens produziert werden, bei dem auf eine Vorsortierung der Mehrfarb-LED-Einheiten verzichtet wird.

### Bezugszeichenliste

- 1: Verarbeitungsmodul
- 101: LIN-Transceiver
- 102: Mikroprozessor
- 2: interner Datenbus
- 3: Mehrfarb-LED-Einheiten
- 301, 302, 303, 304: Einfarb-LEDs
- 4: Mikrocontroller
- 401: Mikroprozessor
- 402: EEPROM
- 5: Spannungsversorgung
- 6: Kraftfahrzeug-Datenbus
- CL: Leitung für Taktsignal
- DL: Datenleitung
- L1, L2: Stromleitungen
- COM: Kommunikationsschnittstelle
- SR0, SR1, SR2, SR3, SR4: Schieberegister
- KD: Kalibrierdaten
- TS: Temperatursensor
- G1, G2, G3, G4: PWM-Generatoren
- OS: Oszillator
- RE: Spannungsregler
- VDD, VSS: Spannungen
- CO: Stromausgang

## Patentansprüche

1. Beleuchtungsvorrichtung, insbesondere für ein Kraftfahrzeug, umfassend mehrere Mehrfarb-LED-Einheiten (3) mit jeweils einstellbarem Farbort und einstellbarer Helligkeit, wobei jede Mehrfarb-LED-Einheit (3) ein einzelnes Halbleiterbauelement mit mehreren Einfarb-LEDs (301, 302, 303, 304) unterschiedlicher Farbe und einem Mikrocontroller (4) ist, **dadurch gekennzeichnet, dass** die Einfarb-LEDs (301, 302, 303, 304) und der Mikrocontroller (4) jeder Mehrfarb-LED-Einheit (3) von einem entsprechenden Gehäuse des Halbleiterbauelements umgeben sind, wobei im Mikrocontroller (4) Kalibrierdaten (KD) gespeichert sind, welche eine Abhängigkeit von Betriebsströmen der Einfarb-LEDs (301, 302, 303, 304) von zumindest einem Farbort und zumindest einer Helligkeit der jeweiligen Mehrfarb-LED-Einheit (3) beschreiben, und wobei der Mikrocontroller (4) dazu eingerichtet ist, jede Einfarb-LED (301, 302, 303, 304) in Abhängigkeit von einem eingestellten Farbort und einer eingestellten Helligkeit der jeweiligen Mehrfarb-LED-Einheit (3) durch Einstellen der Betriebsströme der jeweiligen Einfarb-LEDs (301, 302, 303, 304) unter Zugriff auf die Kalibrierdaten (KD) anzusteuern.

2. Beleuchtungsvorrichtung nach Anspruch 1, **dadurch gekennzeichnet, dass** die Kalibrierdaten (KD) für einen einzelnen vorgegebenen Farbort und eine einzelne vorgegebene Helligkeit der jeweiligen Mehrfarb-LED-Einheit (3) die einzustellenden Betriebsströme der jeweiligen Einfarb-LEDs (301, 302, 303, 304) angeben, wobei der Mikrocontroller (4) hieraus die für einen eingestellten Farbort und eine eingestellte Helligkeit zu verwendenden Betriebsströme der jeweiligen Einfarb-LEDs (301, 302, 303, 304) berechnet.

3. Beleuchtungsvorrichtung nach Anspruch 1 oder 2, **dadurch gekennzeichnet, dass** der Mikrocontroller (4) zumindest eines Teils der Mehrfarb-LED-Einheiten (3) derart ausgestaltet ist, dass er bei der Ansteuerung einer jeweiligen Einfarb-LED (301, 302, 303, 304) ferner die Betriebstemperatur der jeweiligen Mehrfarb-LED-Einheit (3) berücksichtigt, so dass ein eingestellter Farbort und eine eingestellte Helligkeit im Betrieb der jeweiligen Mehrfarb-LED-Einheit (3) konstant gehalten werden.

4. Beleuchtungsvorrichtung nach einem der vorhergehenden Ansprüche, **dadurch gekennzeichnet, dass** im Halbleiterbauelement zumindest eines Teils der Mehrfarb-LED-Einheiten (3) ein Temperatursensor (TS) integriert ist, der dazu eingerichtet ist, die Betriebstemperatur der jeweiligen Mehrfarb-LED-Einheit (3) zu messen.

5. Beleuchtungsvorrichtung nach einem der vorhergehenden Ansprüche, **dadurch gekennzeichnet, dass** der Mikrocontroller (4) zumindest eines Teils der Mehrfarb-LED-Einheiten (3) dazu eingerichtet ist, die Betriebstemperatur der jeweiligen Mehrfarb-LED-Einheit (3) basierend auf zumindest einem Teil der Betriebsspannungen und/oder Betriebsströme der Einfarb-LEDs (301, 302, 303, 304) der jeweiligen Mehrfarb-LED-Einheit (3) zu ermitteln.

6. Beleuchtungsvorrichtung nach einem der vorhergehenden Ansprüche, **dadurch gekennzeichnet, dass** der Mikrocontroller (4) zumindest eines Teils der Mehrfarb-LED-Einheiten (3) derart ausgestaltet ist, dass er im Falle, dass die Betriebstemperatur einer jeweiligen Mehrfarb-LED-Einheit (3) eine vorgegebene Schwelle überschreitet, die Helligkeit der Mehrfarb-LED-Einheit (6) verringert.

7. Beleuchtungsvorrichtung nach einem der vorhergehenden Ansprüche, **dadurch gekennzeichnet, dass** die Beleuchtungsvorrichtung mehrere Mehrfarb-LED-Einheiten (3) umfasst, welche an einen internen Datenbus (2) angeschlossen sind, der an ein Verarbeitungsmodul (1) gekoppelt ist, wobei das Verarbeitungsmodul (1) dazu eingerichtet ist, interne Steuerbefehle zur Einstellung der Helligkeit und des Farborts der einzelnen Mehrfarb-LED-Einheiten (3) auf den internen Datenbus (2) zu geben.

8. Beleuchtungsvorrichtung nach Anspruch 7, **dadurch gekennzeichnet, dass** das Verarbeitungsmodul (1) dazu eingerichtet ist, externe Steuerbefehle von einem Kraftfahrzeug- Datenbus (6) zu empfangen und in die internen Steuerbefehle zu wandeln.

9. Beleuchtungsvorrichtung nach einem der vorhergehenden Ansprüche, **dadurch gekennzeichnet, dass** zumindest ein Teil der Mehrfarb-LED-Einheiten (3) eine oder mehrere RGB-LED-Einheiten und/oder RGBW-LED-Einheiten umfasst.

10. Beleuchtungsvorrichtung nach einem der vorhergehenden Ansprüche, **dadurch gekennzeichnet, dass** die Beleuchtungsvorrichtung eine Innenraumbeleuchtung zur Anbringung in einem Kraftfahrzeug oder eine Außenbeleuchtung zur Anbringung an der Außenseite des Kraftfahrzeugs ist.

11. Kraftfahrzeug, umfassend eine oder mehrere Beleuchtungsvorrichtungen nach einem der vorhergehenden Ansprüche.

12. Verfahren zur Herstellung von Beleuchtungsvorrichtungen nach einem der Ansprüche 1 bis 10, **dadurch gekennzeichnet, dass** die Mehrfarb-LED-Einheiten (3) für die Beleuchtungsvorrichtungen hergestellt werden, ohne dass danach eine Vorsortierung basierend auf einer Messung von Farbort und Helligkeit der jeweiligen Mehrfarb-LED-Einheiten (3) durchgeführt wird, wobei anschließend vor oder nach dem Zusammenbau der Mehrfarb-LED-Einheiten (3) zu den jeweiligen Beleuchtungsvorrichtungen jede Mehrfarb-LED-Einheit (3) einzeln einem Kalibriervorgang unterzogen wird, bei dem die Kalibrierdaten (KD) für die jeweilige Mehrfarb-LED-Einheit (3) ermittelt werden und in dem Mikrocontroller (4) der jeweiligen Mehrfarb-LED-Einheit (3) gespeichert werden.

13. Verfahren nach Anspruch 12, **dadurch gekennzeichnet, dass** im Rahmen des Kalibriervorgangs eine jeweilige Mehrfarb-LED-Einheit (3) betrieben wird und dabei der Farbort und die Helligkeit der jeweiligen Mehrfarb-LED-Einheit (3) gemessen wird, wobei die Betriebsströme der jeweiligen Einfarb-LED-Einheiten (301, 302, 303, 304) variiert werden, bis ein oder mehrere vorgegebene Farborte und Helligkeiten der jeweiligen Mehrfarb-LED-Einheit (3) eingestellt sind, wobei die sich für den vorgegebenen oder die vorgegebenen Farborte und die vorgegebene oder vorgegebenen Helligkeiten vorliegenden Betriebsströme gemessen werden und als Kalibrierdaten zusammen mit dem oder den vorgegebenen Farborten und der oder den vorgegebenen Helligkeiten in dem Mikrocontroller (4) der jeweiligen Mehrfarb-LED-Einheit (3) gespeichert werden.

## Claims

1. Illumination device, in particular for a motor vehicle, comprising a plurality of multi-color LED units (3) with respectively settable color point and settable brightness, wherein each multi-color LED unit (3) is an individual semiconductor device with a plurality of single-color LEDs (301, 302, 303, 304) of different color and a microcontroller (4), **characterized in that** the single-color LEDs (301, 302, 303, 304) and the microcontroller (4) of each multi-color LED unit (3) are enclosed by a corresponding housing of the semiconductor device, wherein stored in the microcontroller (4) are calibration data (KD) which describe a dependence of operating currents of the single-color LEDs (301, 302, 303, 304) on at least one color point and at least one brightness of the respective multi-color LED unit (3), and wherein the microcontroller (4) is set up to control each single-color LED (301, 302, 303, 304) in dependence on a set color point and a set brightness of the respective multi-color LED unit (3) by setting the operating currents of the respective single-color LEDs (301, 302, 303, 304) with access to the calibration data (KD).

2. Illumination device according to Claim 1, **characterized in that** the calibration data (KD) for an individual specified color point and an individual specified brightness of the respective multi-color LED unit (3) indicate the operating currents of the respective single-color LEDs (301, 302, 303, 304) that are to be set, wherein, from these, the microcontroller (4) calculates the operating currents of the respective single-color LEDs (301, 302, 303, 304) that are to be used for a set color point and a set brightness.

3. Illumination device according to Claim 1 or 2, **characterized in that** the microcontroller (4) of at least some of the multi-color LED units (3) is configured such that, during control of a respective single-color LED (301, 302, 303, 304), it furthermore takes into account the operating temperature of the respective multi-color LED unit (3), with the result that a set color point and a set brightness are kept constant during the operation of the respective multi-color LED unit (3).

4. Illumination device according to one of the preceding claims, **characterized in that** integrated in the semiconductor device of at least some of the multi-color LED units (3) is a temperature sensor (TS), which is set up to measure the operating temperature of the respective multi-color LED unit (3).

5. Illumination device according to one of the preceding claims, **characterized in that** the microcontroller (4) of at least some of the multi-color LED units (3) is set up to ascertain the operating temperature of the respective multi-color LED unit (3) on the basis of at least some of the operating voltages and/or operating currents of the single-color LEDs (301, 302, 303, 304) of the respective multi-color LED unit (3).

6. Illumination device according to one of the preceding claims, **characterized in that** the microcontroller (4) of at least some of the multi-color LED units (3) is configured such that, if the operating temperature of a respective multi-color LED unit (3) exceeds a specified threshold, it reduces the brightness of the multi-color LED unit (6).

7. Illumination device according to one of the preceding claims, **characterized in that** the illumination device comprises a plurality of multi-color LED units (3), which are connected to an internal databus (2), which is coupled to a processing module (1), wherein the processing module (1) is set up to pass internal control commands for setting the brightness and the color point of the individual multi-color LED units (3) to the internal databus (2).

8. Illumination device according to Claim 7, **characterized in that** the processing module (1) is set up to receive external control commands from a motor vehicle databus (6) and convert them to the internal control commands.

9. Illumination device according to one of the preceding claims, **characterized in that** at least some of the multi-color LED units (3) comprise one or more RGB-LED units and/or RGBW-LED units.

10. Illumination device according to one of the preceding claims, **characterized in that** the illumination device is an interior illumination means in a motor vehicle or an exterior illumination means on the outside of the motor vehicle.

11. Motor vehicle, comprising one or more illumination devices according to one of the preceding claims.

12. Method for producing illumination devices according to one of Claims 1 to 10, **characterized in that** the multi-color LED units (3) for the illumination devices are produced without a presorting based on a measurement of color point and brightness of the respective multi-color LED units (3) being performed afterward, wherein subsequently before or after the assembly of the multi-color LED units (3) to the respective illumination devices, each multi-color LED unit (3) individually undergoes a calibration process, in which the calibration data (KD) for the respective multi-color LED unit (3) are ascertained and are stored in the microcontroller (4) of the respective multi-color LED unit (3).

13. Method according to Claim 12, **characterized in that**, in the course of the calibration process, a respective multi-color LED unit (3) is operated and, in the process, the color point and the brightness of the respective multi-color LED unit (3) are measured, wherein the operating currents of the respective single-color LED units (301, 302, 303, 304) are varied until one or more specified color points and brightnesses of the respective multi-color LED unit (3) are set, wherein the operating currents present for the specified color point or points and the specified brightness or brightnesses are measured and are stored, in the form of calibration data, in the microcontroller (4) of the respective multi-color LED unit (3) together with the specified color point or points and the specified brightness or brightnesses.

## Revendications

1. Dispositif d'éclairage, en particulier pour un véhicule automobile, comprenant plusieurs unités à DEL polychromes (3) ayant chacune une localisation chromatique réglable et une luminosité réglable, chaque unité à DEL polychrome (3) étant un composant semi-conducteur individuel pourvu de plusieurs DEL monochromes (301, 302, 303, 304) de couleurs différentes et d'un microcontrôleur (4), **caractérisé en ce que** les DEL monochromes (301, 302, 303, 304) et le microcontrôleur (4) de chaque unité à DEL polychrome (3) sont entourés d'un boîtier correspondant du composant semi-conducteur, dans lequel le microcontrôleur (4) stocke des données de calibrage (KD) qui décrivent un rapport entre des courants de service des DEL monochromes (301, 302, 303, 304) et au moins une localisation chromatique et au moins une luminosité de l'unité à DEL polychrome (3) respective, et dans lequel le microcontrôleur (4) est aménagé pour piloter chaque DEL monochrome (301, 302, 303, 304) en fonction d'une localisation chromatique réglée et d'une luminosité réglée de l'unité à DEL polychrome (3) respective en réglant les courants de service des DEL monochromes (301, 302, 303, 304) respectives en accédant aux données de calibrage (KD).

2. Dispositif d'éclairage selon la revendication 1, **caractérisé en ce que** les données de calibrage (KD) indiquent pour une localisation chromatique prédéfinie individuelle et une luminosité prédéfinie individuelle de l'unité à DEL polychrome (3) respective les courants de service à régler des DEL monochromes (301, 302, 303, 304) respectives, le microcontrôleur (4) calculant sur cette base les courants de service des DEL monochromes (301, 302, 303, 304) respectives à utiliser pour une localisation chromatique réglée et une luminosité réglée.

3. Dispositif d'éclairage selon la revendication 1 ou 2, **caractérisé en ce que** le microcontrôleur (4) au moins d'une partie des unités à DEL polychromes (3) est configuré de telle sorte que lors du pilotage d'une DEL monochrome (301, 302, 303, 304) respective, il tient compte en outre de la température de service de l'unité à DEL polychrome (3) respective de sorte qu'une localisation chromatique réglée et une luminosité réglée sont maintenues constantes en cours de fonctionnement de l'unité à DEL polychrome (3) respective.

4. Dispositif d'éclairage selon l'une quelconque des revendications précédentes, **caractérisé en ce que** dans le composant semi-conducteur au moins d'une partie des unités DEL multicolores (3) un capteur de température (TS) est intégré qui est aménagé pour mesurer la température de service de l'unité à DEL polychrome (3) respective.

5. Dispositif d'éclairage selon l'une quelconque des revendications précédentes, **caractérisé en ce que** le microcontrôleur (4) d'au moins une partie des unités à DEL polychromes (3) est aménagé pour déterminer la température de fonctionnement de l'unité à DEL polychrome (3) respective sur la base d'au moins une partie des tensions de service et/ou des courants de service des DEL monochromes (301, 302, 303, 304) de l'unité à DEL polychrome (3) respective.

6. Dispositif d'éclairage selon l'une quelconque des revendications précédentes, **caractérisé en ce que** le microcontrôleur (4) d'au moins une partie des unités à DEL polychromes (3) est configuré de telle sorte qu'au cas où la température de service d'une unité à DEL polychrome (3) respective dépasse un seuil spécifié, il diminue la luminosité de l'unité à DEL polychrome (6).

7. Dispositif d'éclairage selon l'une quelconque des revendications précédentes, **caractérisé en ce que** le dispositif d'éclairage comprend plusieurs unités à DEL polychromes (3) qui sont connectées à un bus de données interne (2) qui est couplé à un module de traitement (1), le module de traitement (1) étant aménagé pour placer des instructions de commande internes pour le réglage de la luminosité et de la localisation chromatique des unités à DEL polychromes (3) individuelles sur le bus de données interne (2).

8. Dispositif d'éclairage selon la revendication 7, **caractérisé en ce que** le module de traitement (1) est aménagé pour recevoir des instructions de commande externes depuis un bus de données de véhicule automobile (6) et pour les convertir en instructions de commande internes.

9. Dispositif d'éclairage selon l'une quelconque des revendications précédentes, **caractérisé en ce qu'**au moins une partie des unités à DEL polychromes (3) comprend une ou plusieurs unités à DEL RGB et/ou unités à DEL RGBW.

10. Dispositif d'éclairage selon l'une quelconque des revendications précédentes, **caractérisé en ce que** le dispositif d'éclairage est un éclairage d'habitacle à fixer dans un véhicule automobile ou un éclairage extérieur à fixer à l'extérieur du véhicule automobile.

11. Véhicule automobile, comprenant un ou plusieurs dispositifs d'éclairage selon l'une quelconque des revendications précédentes.

12. Procédé de fabrication de dispositifs d'éclairage selon l'une quelconque des revendications 1 à 10, **caractérisé en ce que** les unités à DEL polychromes (3) sont fabriquées pour le dispositif d'éclairage sans effectuer aucun tri préalable sur la base d'une mesure de la localisation chromatique et de la luminosité des unités à DEL polychromes (3) respectives, dans lequel ensuite, avant ou après l'assemblage des unités à DEL polychromes (3) en dispositifs d'éclairage respectifs, chaque unité à DEL polychrome (3) est soumise individuellement à une opération de calibrage lors de laquelle les données de calibrage (KD) sont déterminées pour l'unité à DEL polychrome (3) respective et stockées dans le microcontrôleur (4) de l'unité à DEL polychrome (3) respective.

13. Procédé selon la revendication 12, **caractérisé en ce que** dans le cadre de l'opération de calibrage, une unité à DEL polychrome (3) respective est actionnée et la localisation chromatique et la luminosité de l'unité à DEL polychrome (3) respective sont alors mesurées, dans lequel on fait varier les courants de service des unités DEL monochromes (301, 302, 303, 304) respectives jusqu'à ce qu'une ou plusieurs localisations chromatiques et luminosités prédéfinies de l'unité à DEL polychrome (3) respective aient été réglées, dans lequel les courants de service existants pour la ou les localisations chromatiques prédéfinies et la ou les luminosités prédéfinies sont mesurés et stockés sous forme de données de calibrage avec la ou les localisations chromatiques prédéfinies et ou la ou les luminosités prédéfinies dans le microcontrôleur (4) de l'unité à DEL polychrome (3) respective.
